# EUROPEAN PATENT SPECIFICATION

(11) **EP 1 652 383 B1**
(45) Date of publication and mention of the grant of the patent: **12.12.2007**
(21) Application number: 04744041.7
(22) Date of filing: 22.07.2004
(51) Int. Cl.: H04N 7/24

(54) **CONTENT IDENTIFICATION FOR BROADCAST MEDIA**
INHALTSIDENTIFIKATION FÜR BROADCAST-MEDIEN
IDENTIFICATION DE CONTENUS POUR MEDIAS RADIODIFFUSES

(30) Priority: 26.07.2003 GB 0317571
(43) Date of publication of application: 03.05.2006
(73) Proprietor: Koninklijke Philips Electronics N.V., 5621 BA Eindhoven (NL)
(72) Inventor: ASHLEY, Alexis S. R., Redhill, Surrey RH1 5HA (GB)
(74) Representative: Damen, Daniel Martijn
(86) International application number: PCT/IB2004/002383
(87) International publication number: WO 2005/011279

(56) References cited:
- "European Broadcasting Union Union Européenne de Radio-Télévision Digital Video Broadcasting (DVB); Guidelines on implementation and usage of Service Information (SI); ETR 211" ETSI STANDARDS, EUROPEAN TELECOMMUNICATIONS STANDARDS INSTITUTE, SOPHIA-ANTIPO, FR, vol. BC, no. Second Edition, August 1997 (1997-08), XP014011325 ISSN: 0000-0001
- EARNSHAW N ET AL: "Proposal for MPEG-2 carriage of content referencing information - AN250" MY TV, 16 March 2001 (2001-03-16), XP002237926

## Description

### Technical Field of the Invention

The present invention relates to methods and apparatus for embedding content identification information into a media stream such as a video data stream.

### Background Art

When media content, such as pictures, audio files, video files and the like, are distributed across a network, eg. a peer-to-peer network, it is difficult for the end user to be sure that the media content is what it purports to be. Problems can arise in a number of circumstances.

For example, an ID3 tag placed in an MP3 file labels the content of the file, eg. with the track title. However, this tag is only placed in the file once. If the recording that generated the file was stopped prior to the completion of the source file, then the tag is eliminated, and the file content becomes unknown.

In another example, the media content may have been deliberately labelled to pretend to be something that it is not, or to attribute the media content to a false source of origin. Some peer-to-peer technologies attempt to overcome this problem by using a hashing function on data derived from the media content to form a 'watermark' that cannot easily be tampered with by the end user.

There are a number of existing systems proposed for inserting 'watermark' information into video data streams for the purposes of authentication. An example is described in US 2002/0178368, which utilises a two-stage system to generate a robust watermark component and a fragile watermark component. The fragile component is designed so that the watermark is easily damaged or destroyed when under attack so that a hacker cannot use it. However, the robust component is designed so that it does not lose its integrity when normal media stream delivery operations are performed on it. For example, normal transcoding operations to reduce bit rate when the data stream is to be transferred over a low bandwidth channel will leave the robust watermark component intact.

In the system of US 2002/178368, extracted feature data M_{F} and M_{R} are derived from block level data of an MPEG I-frame and these data are fed into a hashing algorithm, and the output is subjected to private / public key encryption and the resulting watermark information is embedded into the video stream at two different levels to provide the fragile component and the robust component which respectively enable detection of tampering at the block level and the group level.

A problem with the use of hash functions is that they will only produce the same data output if the two media data streams are bit-for-bit identical. If two different devices record the same broadcast content (eg. from a digital satellite), they will not be bit-for-bit identical. This will be due not least because of different times at which the respective recordings stopped and started, and also because of any transmission drop outs that occurred during reception of the broadcast.

### Object of Invention

It is an object of the present invention to provide a secure method of providing content identification and / or authentication on media data streams that may not be bit-for-bit identical.

It is a further object of the invention to provide a method of providing content identification and / or authentication on media data streams that may not be co-extensive in length such that a content tag may be missing.

It is a further object of the invention to provide a method for reliably enabling comparison of two differing media data streams to establish whether they relate to the same media content.

### Summary of Invention

According to one aspect, the present invention provides a method for providing content identification within a media data stream comprising the steps of:
receiving a data stream of media content;
inserting content identification data at regular intervals within the media data stream, the step of inserting content identification data comprising the further steps of:
   extracting data relating to a predetermined property of the media data stream;
   combining the extracted data with content identification data;
   applying a digital signature to the combined data; and
   inserting the combined data and digital signature as secured content identification data into the data stream.

According to another aspect, the present invention provides a method of transcoding a media data stream comprising the steps of:
receiving a data stream of media content including embedded, secured content identification data, in which the secured content identification data incorporates data relating to a predetermined property of the media data stream;
transcoding the media content of the data stream into a new format;
extracting data relating to a predetermined property of the media data stream in its new format;
extracting content identification data from the media data stream;
combining the extracted data with the extracted content identification data;
applying a digital signature to the combined data; and
inserting the combined data and digital signature as re-secured content identification data into the data stream:

According to another aspect, the present invention provides a method of verifying the integrity of secured content identification data embedded in a media data stream, comprising the steps of:
receiving a data stream of media content including embedded, secured content identification data, in which the secured content identification data incorporates data relating to a predetermined property of the media data stream;
extracting first data relating to a predetermined property of the media data stream;
extracting content identification data from the media data stream;
extracting second data relating to the predetermined property from the secured content identification data;
comparing the first data and the second data to verify the authenticity of the extracted content identification data.

According to another aspect, the present invention provides an apparatus for providing content identification within a media data stream comprising:
means for receiving a data stream of media content; and
means for inserting content identification data at regular intervals within the media data stream, wherein the means for inserting comprises:
   a data extraction module for extracting data relating to a predetermined property of the media data stream;
   means for combining the extracted data with content identification data;
   an encryption module for applying a digital signature to the combined data; and
   a data merge module for inserting the combined data and digital signature as secured content identification data into the data stream.

According to another aspect, the present invention provides an apparatus for transcoding a media data stream, comprising:
means for receiving a data stream of media content including embedded, secured content identification data, in which the secured content identification data Incorporates data relating to a predetermined property of the media data stream;
a transcoder module for transcoding the media content of the data stream into a new format;
a data extraction module for extracting data relating to a predetermined property of the media data stream in its new format and for extracting content identification data from the media data stream;
means for combining the extracted data with the extracted content identification data;
an encryption module for applying a digital signature to the combined data; and
a data merge module for inserting the combined data and digital signature as re-secured content identification data into the data stream.

According to another aspect, the present invention provides an apparatus for verifying the integrity of secured content identification data embedded in a media data stream, comprising:
means for receiving a data stream of media content including embedded, secured content identification data, in which the secured content identification data incorporates data relating to a predetermined property of the media data stream;
a data extraction module for extracting first data relating to a predetermined property of the media data stream;
a decryption module for extracting content identification data from the media data stream; and for extracting second data relating to the predetermined property from the secured content identification data; and
a compare module for comparing the first data and the second data to verify the authenticity of the extracted content identification data.

### Brief Description of the Drawings

Embodiments of the present invention will now be described by way of example and with reference to the accompanying drawings in which:
Figure 1 shows a schematic block diagram of an apparatus for inserting content identification information into a media data stream;
Figure 2 shows a schematic block diagram of a transcoder device for transcoding the media stream output of the device of Figure 1, while maintaining the integrity of embedded content identification information;
Figure 3 is a flowchart illustrating the steps of inserting content identification information into a media data stream;
Figure 4 is a schematic block diagram of a receiving device for extracting and verifying content identification information embedded in a data stream; and
Figure 5 is a flowchart illustrating the steps of extracting and verifying content identification information embedded in a data stream.

### Specific Description of the Embodiments

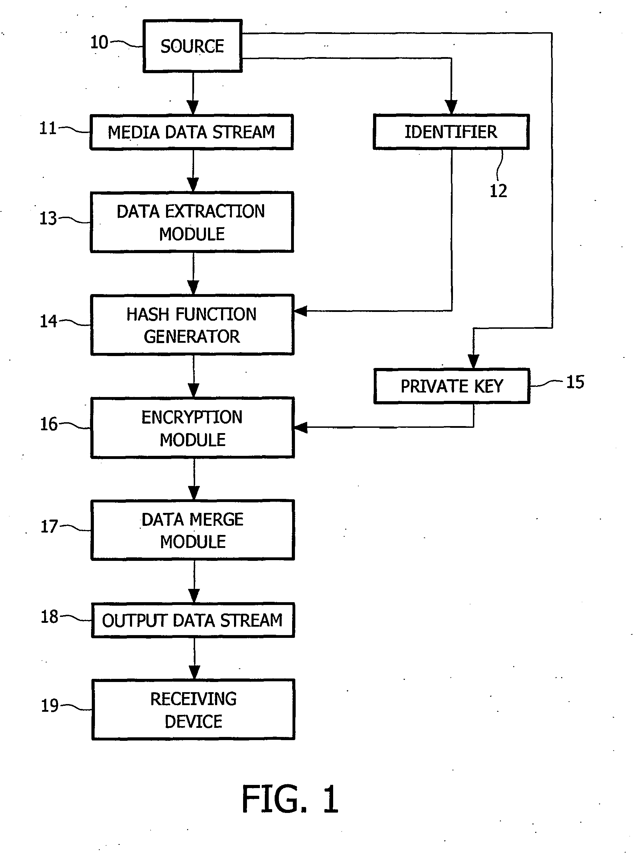

With reference to Figure 1, a programme of media content is provided for broadcast, transmission or other form of distribution, by a media content data source 10, as a media data stream 11. The source 10 also provides an identifier 12, to be repeatedly embedded into the media data stream 11.

The identifier 12 may be any item of identification data originated by the media content provider 10, for example indicating some nature of the media content. This 'content identification data' may include the identity of the content provider, the name or title of the media (eg. film name or song title), and / or information relating to its subject matter (eg. whether the media content is a pay-per-view movie or a free-to-view advert). The identifier 12 is to be embedded into the media data stream at frequent intervals, preferably regular or periodic intervals, for example within each frame of data to be transmitted to a third party device 19.

In a first aspect, the repeated inclusion of the content identification data, eg. into every frame of a movie, provides a first level of security making it difficult for an unauthorised third party to tamper with the identifier, in that it must be edited for each and every occurrence. In addition, if a recording of the movie is terminated early, or not started at the beginning, it will still be possible to ascertain the identity of the media stream since the identifier is repeated at frequent intervals.

Therefore, in principle, this identifier 12 could be used by any receiving devices to verify that two copies of the media data stream 11 are in fact the same. However, on its own, the identifier 12 is not ideal because it is still relatively easy for a fraudulent third party to insert the same identifier into any content they choose, simply by copying the identifier. In practice, the identifier 12 should preferably be protected in such a manner that it cannot easily be inserted into a media data stream 11 and such that any identifier can be verified as authentic, eg. belonging to a particular broadcast source. The verifiability of authenticity of the identifier enables a receiving device to decide whether the source of the transmitted media data stream is a trustworthy source.

The first step to providing tamper resistance of the identifier is to use some rapidly changing property of the media data stream that is difficult to alter. For example, in an MPEG2 video data stream, the rapidly changing property may comprise one or more of: a PID (the transport stream identifier); one or more PCR clock signals in the stream; a continuity count that increments for each data packet; a frame size; and a hashcode for a selected frame.

The frame size property may be the size in bytes of a compressed frame of video or audio or still picture. The frame hashcode may be the result of passing the compressed bytes of the video, audio or still picture through a selected hashing function. The PID may be any stream identifier for an interleaved or multiplexed set of separate data streams.

Preferably, the rapidly changing property of the data stream 11 is one which changes with each video data frame. More preferably, the rapidly changing property is a combination of the frame size and the frame hash. The rapidly changing property is used to generate or extract data that can be combined with the identifier to make it difficult to copy and insert identifiers.

Data relating to the rapidly changing property is extracted by suitable data extraction module 13 and combined with the identifier 12 at a hash function generator 14 to form a hash code output. Any appropriate mathematical combination of the extracted data and the content identification data may be used to generate the combined data, eg. hash code.

The hash code output of the hash function generator 14 is provided to an encryption module 16 together with the private key 15 of the source 10. The encryption module 16 digitally signs the hash code such that its authenticity can be verified by a third party having access to the corresponding public key of the source 10.

The digitally signed hash code output of the encryption module 16 (ie. the 'secured' content identification data) is then inserted into the data stream by a data merge module 17 to form output data stream 18. In preferred arrangements, the digitally signed hash code (secured content identification data) is inserted periodically and in conjunction with the data frame or block to which it relates, ie. by reference to the rapidly varying property from which the property data was extracted.

The output data stream 18 is passed to a receiving device 19 using any appropriate data transmission medium. This could be over a conventional wireless or wired transmission network in real time continuous transmission or packetised. Alternatively, the output data stream could be provided to the receiving device 19 by way of a suitable physical data carrier such as a disk, tape, random access memory or the like.

The stream property selected by data extraction module 13 for combination with the identifier 12 is preferably chosen to make it difficult to insert the identifier into an incorrect piece of content. For example, it would be almost impossible to engineer a video stream in such a manner that the frame size and hash codes of every I frame matched that of the inserted identifier.

The hashing function applied to the identifier 12 and the extracted stream property data make it very difficult to alter either the property or the identity because the hash would no longer be correct. The identifier 12 is used by a receiving device 19 to determine the true content and/or origin of the data as provided by the data source 10. The digital signature applied by encryption module 16 makes it impossible to alter the identifier without detection, because decryption using the public key of the source 10 would no longer provide an output that matched the identity of the source 10.

The various elements of the media data stream generator of Figure 1 (eg. data extraction module 13, hash function generator 14, encryption module 16 and data merge module 17) may be implemented as hardware or software modules within a media data stream generator device. The embedding of the identifier into the media data stream may be carried out in real time during creation of the data stream or after creation / copying of the media data stream. Where the selected stream property includes a hash of frame data, the hash function generator 24 may also compute the frame hash prior to carrying out the hash combination with the identifier 22.

The particular frame data stream property used may be chosen to be one that will survive any authorised data processing of the data stream, eg. re-multiplexing.

One method of compromising the security of a digitally signed identifier is to provide a receiver device 19 with a false public key. In this way, the identifier 12 can be corrupted or altered by a fraudulent party, and a false public key distributed so that the receiver device cannot detect the lack of a genuine signature on the data. In this way, the fraudulent party can falsely sign media content such that any receiving device using the false public key will obtain a matching signature.

The conventional way to provide security against such fraudulent activity is to use public key certificates. A certificate contains the public key of the data source 10 and the identity and digital signature of a trusted third party. If the third party is trusted, then the certificate can be assumed to contain the true public key of the source 10. There is usually provided a tree of certificates eventually ending up at one of a few root certificate authorities that are well known as trusted third parties.

The certification tree can be used in the tamper resistant content identifier system described above to detect who created the identifier 12. The signature embedded in the broadcast media data stream 18 received by the receiving device 19 can be checked against the certificate of the body that created the identifier. The certificate can be transmitted in the broadcast data stream or provided by some other means such as by download over the internet.

A further enhancement to the content identification system described above is to enable the detection of editing of the content. This can be achieved by the addition of a continuity count within the identifier, preferably inserted prior to application of the hashing function by the hash function generator 14. Alternatively, the continuity count could be added after the hashing function and before digital signature by the encryption module 16. In either way, the continuity count is also protected by the digital signature. The continuity count comprises a data field that increments in a known or predictable manner each time the identifier is inserted into the media data stream 11. A receiving device 19 can thereby detect unauthorised editing to the media content of the data stream by detecting any discontinuity in the embedded continuity count.

There are many situations in which a receiving device 19 may wish to alter the bit rate of a media data stream 18 that it has received from a data source 10. Examples of this are when the data stream is to be transcoded for use by a subsequent receiving device or transmission channel which operates at a lower bandwidth, lower audio or video output resolution or which generally otherwise requires some other restriction on the data. If this transcoded data stream is subsequently passed to another receiving device, the broadcaster may desire that this compromised quality of the original data stream is made evident to the end user.

When the data stream is transcoded, the stream property values in the embedded identifier will no longer match those derivable from the media data stream. Thus, to a receiving device, it will appear that the content identification provided by the identifier 12 is not authentic.

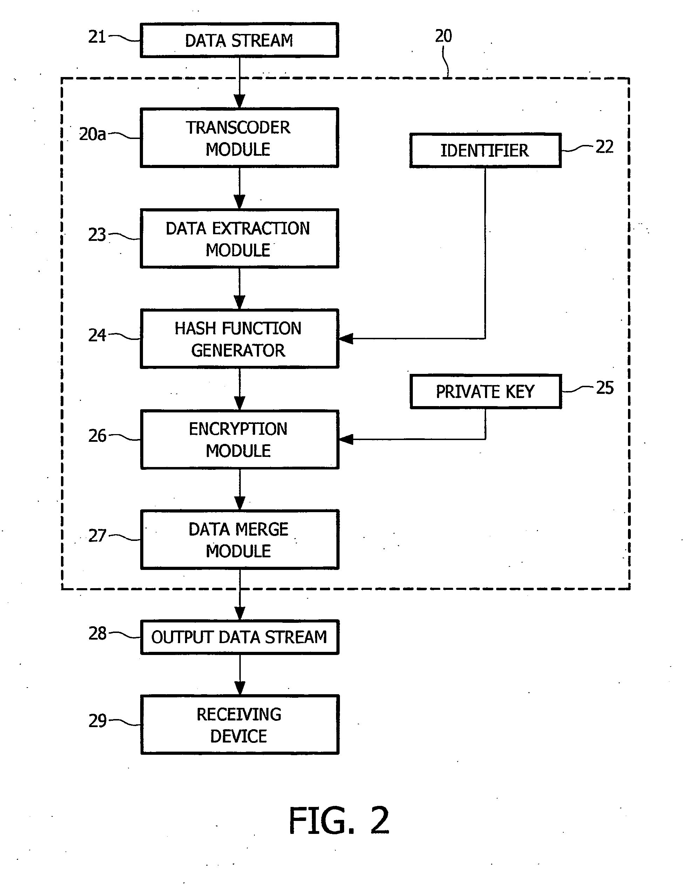

With reference to Figure 2, to correct for this (if the transcoding operation is authorised), a transcoding device 20 receives the data stream 21 that includes the embedded and digitally signed identifiers, and replaces the identifiers with recalculated identifiers based on the newly changed properties of the data stream. Firstly, a transcoder module 20a transcodes the media data stream to its new format, eg. with lower video resolution for transmission over a lower bandwidth transmission channel. A data extraction module 23 recalculates the data stream properties for use with a new or modified identifier 22 and strips the original identifiers out of the transcoded data stream.

A hash function generator 24 then generates a new hash code output based on the recalculated data stream property and the new or modified identifier 22. The new identifier 22 may comprise data identifying the transcoding device 20 as the new data source. The new identifier 22 may retain other original data from the original identifier, if appropriate.

The hash code output of the hash function generator 24 is provided to an encryption module 26 together with the private key 25 of the transcoder 20. The encryption module 26 digitally signs the hash code such that its authenticity can be verified by a third party having access to the corresponding public key of the transcoder 20.

The digitally signed hash code output of the encryption module 26 is then inserted into the transcoded data stream by a data merge module 27 to form transcoded output data stream 28.

The output data stream 28 may be passed to a receiving device 29 using any appropriate data transmission medium as previously described.

Any receiving device 29 receiving this transcoded data stream will be able to check that the identifiers match the information blocks of the media data stream to which they relate by decrypting the digitally signed identifiers using the public key of the transcoder device 20. The receiving device can use the tree of certificates to verify that the public key is authentic and that the media content is authentic.

Furthermore, to verify that the transcoding device has the authority of, or approval of, the original media content data source and provider of the original content identification data (eg. broadcaster), it is possible for the public key of the transcoding device to be digitally signed by the original content data source as well as, or instead of, the trusted third party (eg. certification authority).

Thus, as part of the signature process, the transcoding device also makes available its public key in a form that is digitally signed by the broadcasting authority or the originator of the secured content identification data. The broadcaster, or originating source 10 would only sign the public key of transcoding devices that it trusted not to label the media content incorrectly. For example, a transcoder device may modify the data stream and sign the modified identifier. When another device receives the modified stream, it will detect that the stream has been signed by another party other than the original broadcaster. However, by checking the public key of the transcoder device, the receiving device can establish that the key has been signed by another trusted party, preferably the original broadcaster.

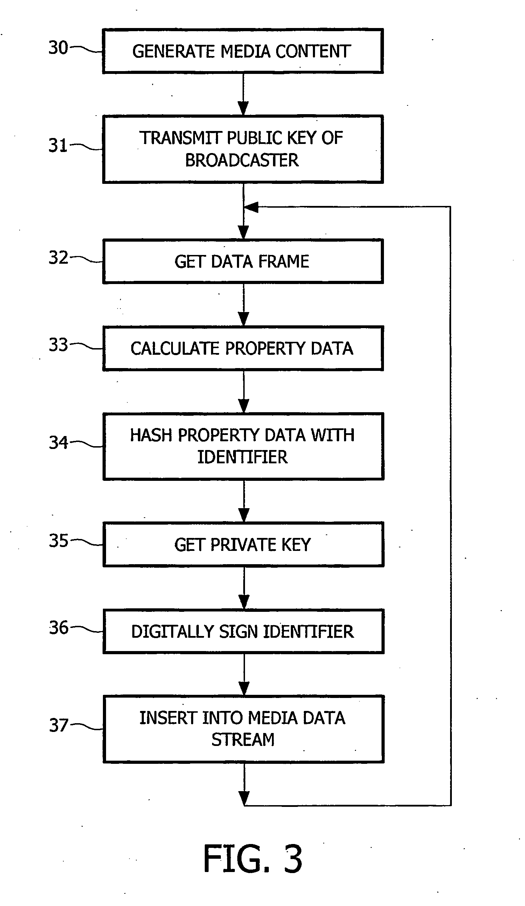

An exemplary method for inserting the identifier data is now described in connection with Figure 3. In this example, a broadcaster or other source (eg. 10, figure 1) wishes to insert the identifier "crid://broadcaster.co.uk/ShopstarsEpisode12" to their broadcast of episode 12 of their series called "Shopstars", ie the generated media content of step 30. On the broadcast channel, the broadcaster transmits (step 31) their name (eg. "broadcaster.co.uk"), their public key (eg. "AAAAAAA"), the name of the signature authority (trusted third party) verifying the public key (eg. "intertrust.com") and the public key signed by the signature authority (eg. "ZZZZZZZ") so that the public key can be verified, by any receiving device, as the true public key of the broadcaster.

When episode 12 of "Shop Stars" is being broadcast, a first data frame of the media content is obtained (step 32) and the selected property data for that frame are extracted / calculated from the frame data (step 33). The identifier message "crid://broadcaster.co.uk/ShopstarsEpisode12" is hashed with the extracted / calculated property data (step 34).

For example, the selected property may be the size of the last I frame, and the MD5 sum (hash function) of the last I frame, which is combined with the broadcaster name "broadcaster.co.uk", and the identifier message "crid://broadcaster.co.uk/ShopstarsEpisode12" to obtain an MD5 sum. This sum, being the hash code for insertion into the data stream, is digitally signed using the private key of the device (steps 35 and 36) and inserted into the transmitted data stream (step 37). The process then repeats for each successive new data frame, returning to step 32.

It will be noted that each time the identifier is inserted, the hash function is recalculated on the basis of new I frame data so that the identifier is intimately linked with the broadcast stream. In a preferred example, the size and hash of the previous I frame will change approximately twice every second.

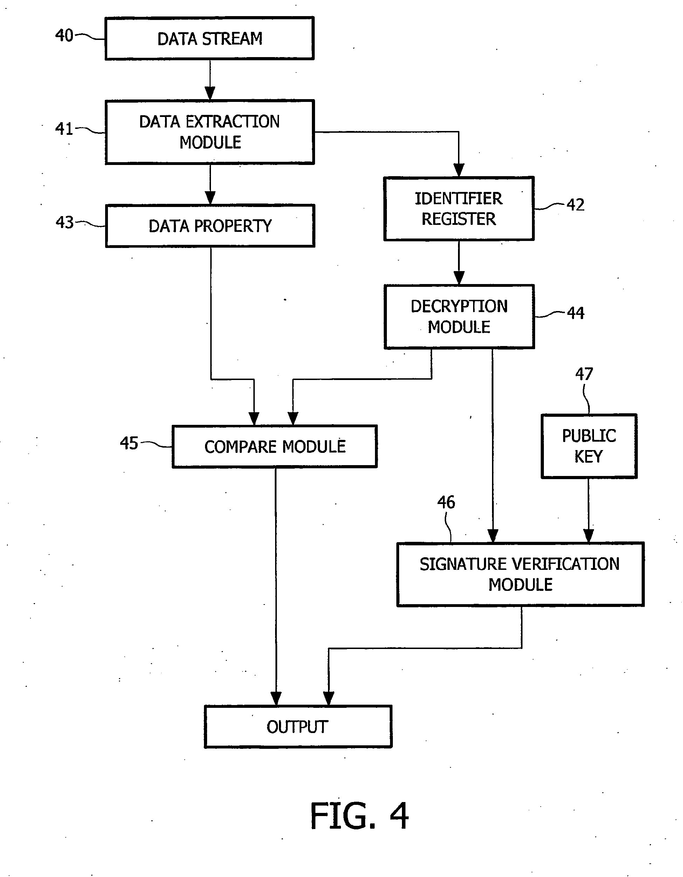

With reference to Figure 4, a receiver device 29 will now be described in more detail. A data stream 40 is received by a data extraction module 41 that extracts (i) the predetermined property of the data stream that is used to verify the identifier, saved in register 43, and (ii) the respective copy of the secured identifier embedded in the data stream, saved in register 42.

The identifier 42 is passed to a decryption module 44 which extracts the hash code embedded and digitally signed in the identifier 22. This is compared with the calculated / extracted predetermined property 43 by a compare module 45. At the same time, the digital signature embedded in the identifier is checked by a signature verification module 46 by obtaining the public key 47 of the appropriate signature authority or authorities. This may involve obtaining the public key of a certificating authority according to known practices, to verify the authenticity of the broadcaster's public key.

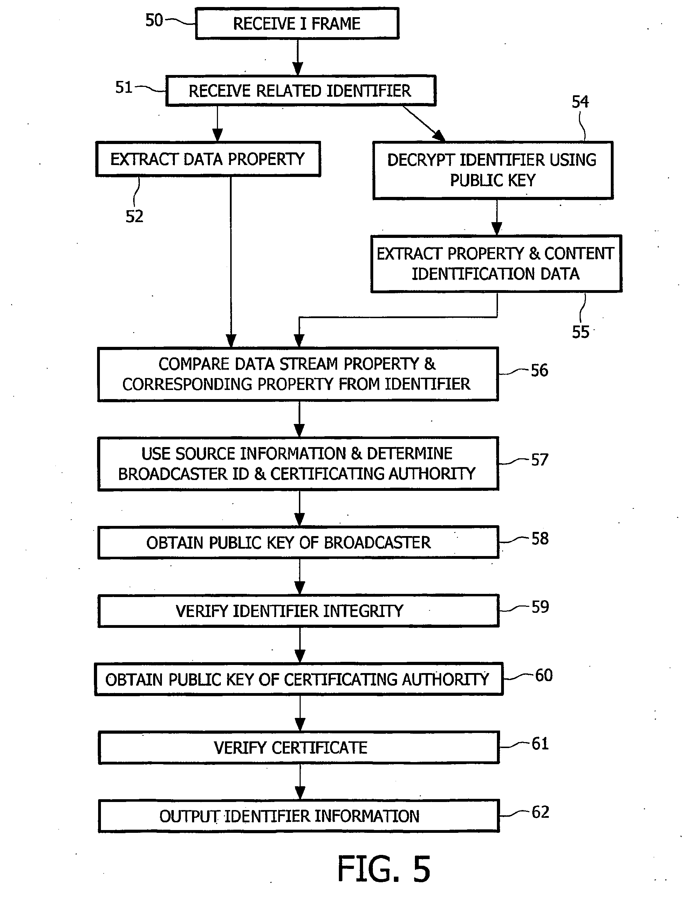

The method performed by the receiving device 29 to verify the authenticity of the inserted identifiers is described in connection with figure 5. The receiving device 29 obtains a first I frame (step 50) and an adjacent, embedded or related identifier (step 51). The receiver extracts the appropriate data property from the data stream (step 52). As previously described, this may comprise any suitable rapidly changing property of the data stream 11, eg. one which changes with each video data frame. In a preferred arrangement, the rapidly changing property is a combination of the frame size and the frame hash. In a preferred arrangement, a hash code of this property or properties is generated.

Contemporaneously, the related identifier is decrypted (step 54) to extract (step 55) the inserted identifier, which is a combination of the content identification data (eg. source identity) and the data stream property. The data stream property extracted from the embedded identifier is compared with the newly generated property (step 56). The extracted content identification data is then used to determine the broadcaster ID and the certificating authority (trusted third party) ID (step 57). This is then used to obtain the public key of the broadcaster (step 58) and to then verify the integrity of the identifier (step 59). The public key of the certificating authority is then obtained (step 60) and verification of the certificate made (step 61). If the authenticity of the identifier information is fully verified, the identifier information (eg. broadcaster ID and media stream information) can be output for the user (step 62).

Other embodiments are intentionally within the scope of the appended claims.

## Claims

1. A method for providing content identification within a media data stream (11) comprising the steps of:
receiving a data stream (11) of media content;
inserting content identification data at regular intervals within the media data stream,
the method **characterised by** the step of inserting content identification data comprising the further steps of:
extracting (33) data relating to a predetermined property of the media data stream;
combining the extracted data with content identification data (12);
applying (36) a digital signature to the combined data; and
Inserting (37) the combined data and digital signature as secured content identification data into the data stream.

2. The method of claim 1 wherein the content identification data is inserted every frame.

3. The method of claim 1 wherein the content identification data is digitally combined with a predetermined property of the data stream.

4. The method of claim 3 in which the step of combining the extracted data with content identification data comprises the step of forming a hash code from the extracted data and the content identification data.

5. The method of claim 1 in which the media data stream may comprise any one or more of pictures and audio or video data streams.

6. The method of claim 3 in which the predetermined property is any property of the media data stream that changes from data frame to data frame.

7. The method of claim 6 in which the predetermined property comprises any one or more of: frame size, frame hash, transport stream identifier, clock signal, and continuity count.

8. The method of claim 7 in which the predetermined property is a combination of frame size and frame hash.

9. The method of claim 4 in which the step of applying a digital signature to the hash code further includes applying digital signatures of the originator of the media data stream and a certification authority.

10. A method of transcoding a media data stream comprising the steps of:
receiving a data stream of media content including embedded, secured content identification data, in which the secured content identification data incorporates data relating to a predetermined property of the media data stream;
transcoding the media content of the data stream into a new format;
extracting data relating to a predetermined property of the media data stream in its new format;
extracting content identification data from the media data stream;
combining the extracted data with the extracted content identification data;
applying a digital signature to the combined data; and
inserting the combined data and digital signature as re-secured content identification data into the data stream.

11. The method of claim 10 In which the new format of the data stream has a lower resolution or transmission / storage bandwidth than the original format of the data stream.

12. The method of claim 10 in which the media content may comprise any one or more of pictures, audio, video data streams.

13. The method of claim 10 in which the predetermined property is any property of the media data stream that changes from data frame to data frame.

14. The method of claim 13 in which the predetermined property comprises any one or more of: frame size, frame hash, transport stream identifier, clock signal, and continuity count,

15. The method of claim 14 in which the predetermined property is a combination of frame size and frame hash.

16. The method of claim 10 in which the step of applying a digital signature to the combined data further includes applying a digital signature of the transcoding device.

17. The method of claim 16 in which the step of applying a digital signature to the combined data further includes the step of making available a corresponding public key of the transcoding device that is digitally signed by the originator of the content identification data.

18. The method of claim 10 in which the step of combining the extracted data with the extracted content identification data further includes the step of modifying the extracted content identification data.

19. The method of claim 18 in which the step of modifying the extracted content identification data comprises including an indication of the new format of the transcoded data stream.

20. The method of claim 18 in which the step of modifying the extracted content identification data comprises including an identity of a device performing the transcoding.

21. A method of verifying the integrity of secured content identification data embedded in a media data stream, comprising the steps of:
receiving a data stream of media content including embedded, secured content identification data, in which the secured content identification data incorporates data relating to a predetermined property of the media data stream;
extracting first data relating to a predetermined property of the media data stream;
extracting content identification data from the media data stream;
extracting second data relating to the predetermined property from the secured content identification data;
comparing the first data and the second data to verify the authenticity of the extracted content identification data.

22. The method of claim 21 wherein the content identification data is extracted from the secured identification data.

23. The method of claim 21 wherein the step of comparing the first data and the second data comprises comparing a hash of the first data and the extracted content identification data with the extracted second data.

24. The method of claim 21 in which the step of extracting second data from the secured content identification data comprises the steps of:
obtaining a public key of a content provider that secured the content identification data; and
verifying an encrypted signature of the content provider using the public key.

25. The method of claim 24 in which the step of extracting second data from the secured content identification data comprises the steps of:
obtaining a public key of a certification authority;
verifying the authenticity of the public key of the content provider using the public key of the certification authority.

26. The method of claim 21 in which the media data stream is received via a transcoding device, and in which the step of extracting second data from the secured content identification data comprises the steps of verifying that the transcoder device was authorised to modify the data stream by an originator of the content identification data.

27. The method of claim 26 in which the step of extracting second data from the secured content identification data comprises the steps of:
obtaining a public key of: the transcoding device that secured the content identification data, the public key being digitally signed by the originator of the content identification data;
obtaining a public key of the originator;
verifying an encrypted signature of the originator using the public key of the originator, and thereby verifying the public key of the transcoder device;
verifying the content identification information using the verified public key of the transcoder device.

28. The method of claim 21 in which the media content may comprise any one or more of pictures, audio, video data streams.

29. The method of claim 21 in which the predetermined property is any property of the media data stream that changes from data frame to data frame.

30. The method of claim 29 in which the predetermined property comprises any one or more of: frame size, frame hash, transport stream Identifier, clock signal, and continuity count

31. The method of claim 30 in which the predetermined property is a combination of frame size and frame hash.

32. Apparatus for providing content identification within a media data stream (11) comprising:
means for receiving a data stream (11) of media content;
means for inserting content identification data at regular intervals within the media data stream,
wherein the means for inserting comprises:
a data extraction module (13) for extracting data relating to a predetermined property of the media data stream;
means (14) for combining the extracted data with content identification data (12);
an encryption module (16) for applying a digital signature to the combined data; and
a data merge module (17) for inserting the combined data and digital signature as secured content identification data into the data stream (18).

33. The apparatus of claim 32 in which the means for combining includes a hash function generator (14) for forming a hash code from the combined data, the encryption module applying the digital signature to the hash code.

34. Apparatus for transcoding a media data stream, comprising:
means for receiving a data stream (21) of media content including embedded, secured content identification data, in which the secured content identification data incorporates data relating to a predetermined property of the media data stream;
a transcoder module (20a) for transcoding the media content of the data stream into a new format;
a data extraction module (23) for extracting data relating to a predetermined property of the media data stream in its new format and for extracting content identification data from the media data stream;
means (24) for combining the extracted data with the extracted content identification data;
an encryption module (26) for applying a digital signature to the combined data; and
a data merge module (27) for inserting the combined data and digital signature as re-secured content identification data into the data stream (28).

35. Apparatus for verifying the integrity of secured content identification data embedded in a media data stream, comprising:
means for receiving a data stream (40) of media content including embedded, secured content identification data, in which the secured content identification data incorporates data relating to a predetermined property of the media data stream;
a data extraction module (41) for extracting first data relating to a predetermined property of the media data stream;
a decryption module (44) for extracting content identification data from the media data stream; and for extracting second data relating to the predetermined property from the secured content identification data;
a compare module (45) for comparing the first data and the second data to verify the authenticity of the extracted content identification data.

36. A computer program product, comprising a computer readable medium having thereon computer program code means adapted, when said program is loaded onto a computer, to make the computer execute the procedure of any one of claims 1 to 31.

37. A computer program product, distributable by electronic data transmission, comprising computer program code means adapted, when said program is loaded onto a computer, to make the computer execute the procedure of any one of claims 1 to 31.

## Patentansprüche

1. Verfahren zum Schaffen von Inhaltsidentifikation innerhalb eines Mediendatenstroms (11), wobei dieses Verfahren die nachfolgenden Verfahrensschritte umfasst:
- das Empfangen eines Datenstroms (11) von Medieninhalt,
- das Einfügen von Inhaltsidentifikationsdaten zu regelmäßigen Intervallen innerhalb des Mediendatenstroms,
wobei das Verfahren **gekennzeichnet ist durch** den Verfahrensschritt der Einfügung von Inhaltsidentifikationsdaten, wobei dieser Schritt die nachfolgenden Schritte umfasst:
- das Extrahieren (33) von Daten in Bezug auf eine vorbestimmte Eigenschaft des Mediendatenstroms,
- das Kombinieren der extrahierten Daten mit Inhaltsidentifikationsdaten (12);
- das Hinzufügen (36) einer digitalen Unterschrift zu den kombinierten Daten; und
- das Einfügen (37) der kombinierten Daten und der digitalen Unterschrift als gesicherte Inhaltsidentifikationsdaten in den Datenstrom.

2. Verfahren nach Anspruch 1, wobei die Inhaltsidentifikationsdaten jedes Frame eingefügt werden.

3. Verfahren nach Anspruch 1, wobei die Inhaltsidentifikationsdaten mit einer vorbestimmten Eigenschaft des Datenstroms digital kombiniert werden.

4. Verfahren nach Anspruch 3, wobei der Schritt der Kombination der extrahierten Daten mit Inhaltsidentifikationsdaten den Schritt der Bildung eines Hashcodes aus den extrahierten Daten und den Inhaltsidentifikationsdaten umfasst.

5. Verfahren nach Anspruch 1, wobei der Mediendatenstrom ein oder mehrere Bilder und Audio- oder Videodatenströme aufweisen kann.

6. Verfahren nach Anspruch 3, wobei die vorbestimmte Eigenschaft jede beliebige Eigenschaft des Mediendatenstroms ist, der von Datenframe zu Datenframe ändert.

7. Verfahren nach Anspruch 6, wobei die vorbestimmte Eigenschaft Folgendes umfassen kann: Framegröße, Framehashwert, Transportstromidentifizierer, Taktsignal und Kontinuitätszählung.

8. Verfahren nach Anspruch 7, wobei die vorbestimmte Eigenschaft eine Kombination der Framegröße und dem Hashwert ist.

9. Verfahren nach Anspruch 4, wobei der Schritt der Hinzufügung einer digitalen Unterschrift zu dem Hashcode weiterhin das Hinzufügen digitaler Unterschriften des Urhebers des Mediendatenstroms und einer Zertifizierungsstelle umfasst.

10. Verfahren zur Umcodierung eines Mediendatenstroms mit den nachfolgenden Verfahrensschritten:
- das Empfangen eines Datenstroms mit Medieninhalt mit eingebetteten, gesicherten Inhaltsidentifikationsdaten, wobei die gesicherten Inhaltsidentifikationsdaten Daten in Bezug auf eine vorbestimmte Eigenschaft des Mediendatenstroms enthalten;
- das Umcodieren des Medieninhaltes des Datenstroms in ein neues Format;
- das Extrahieren von Daten in Bezug auf eine vorbestimmte Eigenschaft des Mediendatenstroms in dem neuen Format;
- das Extrahieren von Inhaltsidentifikationsdaten aus dem Mediendatenstrom;
- das Kombinieren der extrahierten Daten mit den extrahierten Inhaltsidentifikationsdaten;
- das Hinzufügen einer digitalen Unterschrift zu den kombinierten Daten; und
- das Einfügen der kombinierten Daten und der digitalen Unterschrift als neu gesicherte Inhaltsidentifikationsdaten in den Datenstrom.

11. Verfahren nach Anspruch 10, wobei das neue Format des Datenstroms eine niedrigere Auflösung oder Übertragungs-/Speicherbandbreite hat als das ursprüngliche Format des Datenstroms.

12. Verfahren nach Anspruch 10, wobei der Medieninhalt ein oder mehrere Bilder, Audio-, Videodatenströme aufweisen kann.

13. Verfahren nach Anspruch 10, wobei die vorbestimmte Eigenschaft jede beliebige Eigenschaft des Mediendatenstroms ist, die von Datenframe zu Datenframe ändert.

14. Verfahren nach Anspruch 13, wobei die vorbestimmte Eigenschaft die Framegröße, der Framehashwert, der Transportstromidentifizierer, das Taktsignal und/oder die Kontinuitätszählung ist.

15. Verfahren nach Anspruch 14, wobei die vorbestimmte Eigenschaft eine Kombination von Framegröße und Framehashwert ist.

16. Verfahren nach Anspruch 10, wobei der Schritt der Hinzufügung einer digitalen Unterschrift zu den kombinierten Daten weiterhin das Hinzufügen einer digitalen Unterschrift der Umcodierungsanordnung umfasst.

17. Verfahren nach Anspruch 16, wobei der Schritt der Hinzufügung einer digitalen Unterschrift zu den kombinierten Daten weiterhin den Schritt umfasst, in dem ein entsprechender öffentlicher Schlüssel der Umcodierungsanordnung verfügbar gestellt wird, der von dem Urheber der Inhaltsidentifikationsdaten unterschieben worden ist.

18. Verfahren nach Anspruch 10, wobei der Schritt der Kombination der extrahierten Daten mit den extrahierten Inhaltsidentifikationsdaten weiterhin den Schritt der Modifikation der extrahierten Inhaltsidentifikationsdaten umfasst.

19. Verfahren nach Anspruch 18, wobei der Schritt der Modifikation der extrahierten Inhaltsidentifikationsdaten das Einschließen des neuen Formats des umcodierten Datenstroms umfasst.

20. Verfahren nach Anspruch 18, wobei der Schritt der Modifikation der extrahierten Inhaltsidentifikationsdaten das Einschließen einer Identität einer Anordnung umfasst, welche die Umcodierung durchführt.

21. Verfahren zum Überprüfen der Integrität gesicherter Inhaltsidentifikationsdaten, die in einen Mediendatenstrom eingebettet sind, wobei dieser Schritt die nachfolgenden Verfahrensschritte umfasst:
- das Empfangen eines Datenstroms mit Medieninhalt mit eingebetteten, gesicherten Inhaltsidentifikationsdaten, wobei die gesicherten Inhaltsidentifikationsdaten Daten in Bezug auf eine vorbestimmte Eigenschaft des Mediendatenstroms enthalten;
- das Extrahieren erster Daten in Bezug auf eine vorbestimmte Eigenschaft des Mediendatenstroms;
- das Extrahieren zweiter Daten in Bezug auf die vorbestimmte Eigenschaft aus den gesicherten Inhaltsidentifikationsdaten:
- das Vergleichen der ersten Daten mit den zweiten Daten zum Überprüfen der Authentizität der extrahierten Inhaltsidentifikationsdaten.

22. Verfahren nach Anspruch 21, wobei die Inhaltsidentifikationsdaten aus den gesicherten Identifikationsdaten extrahiert werden.

23. Verfahren nach Anspruch 21, wobei der Schritt, in dem die ersten Daten mit den zweiten Daten verglichen werden, das Vergleichen eines Hashwertes der ersten Daten und der extrahierten Inhaltsidentifikationsdaten mit den extrahierten zweiten Daten umfasst.

24. Verfahren nach Anspruch 21, wobei der Schritt, in dem zweite Daten aus den gesicherten Inhaltsidentifikationsdaten extrahiert werden, die nachfolgenden Verfahrensschritte umfasst:
- das Erhalten eines öffentlichen Schlüssels eines Inhaltslieferanten, der die Inhaltsidentifikationsdaten sicherte; und
- das Überprüfen einer verschlüsselten Unterschrift des Inhaltslieferanten unter Verwendung des öffentlichen Schlüssels.

25. Verfahren nach Anspruch 24, wobei der Schritt, in dem zweite Daten aus den gesicherten Inhaltsidentifikationsdaten extrahiert werden, die nachfolgenden Verfahrensschritte umfasst:
- das Erhalten eines öffentlichen Schlüssels einer Zertifizierungsstelle;
- das Überprüfen der Authentizität des öffentlichen Schlüssels des Inhaltslieferanten unter Verwendung des öffentlichen Schlüssels der Zertifizierungsstelle.

26. Verfahren nach Anspruch 21, wobei der Mediendatenstrom über eine Umcodierungsanordnung empfangen wird, und wobei der Schritt, in dem zweite Daten aus den gesicherten Inhaltsidentifikationsdaten extrahiert werden, die nachfolgenden Verfahrensschritte umfasst:
- das Überprüfen, ob die Umcodieranordnung von dem Urheber der Inhaltsidentifikationsdaten autorisiert war, den Datenstrom zu ändern.

27. Verfahren nach Anspruch 26, wobei der Schritt, in dem zweite Daten aus den gesicherten Inhaltsidentifikationsdaten extrahiert werden, die nachfolgenden Verfahrensschritte umfasst:
- das Erhalten eines öffentlichen Schlüssels der Umcodierungsanordnung, der die Inhaltsidentifikationsdaten sicherte, wobei der öffentliche Schlüssel von dem Urheber der Inhaltsidentifikationsdaten digital unterschrieben worden ist;
- das Erhalten eines öffentlichen Schlüssels des Urhebers:
- das Überprüfen einer verschlüsselten Unterschrift des Urhebers unter Verwendung des öffentlichen Schlüssels des Urhebers, und wobei der öffentliche Schlüssel der Umcodierungsanordnung überprüft wird:
- das Überprüfen der Inhaltsidentifikationsinformation unter Verwendung des überprüften öffentlichen Schlüssels der Umcodierungsanordnung.

28. Verfahren nach Anspruch 21, wobei der Medieninhalt Bilder, Audio-, Video- und/oder Datenströme enthalten kann.

29. Verfahren nach Anspruch 21, wobei die vorbestimmte Eigenschaft eine Eigenschaft des Mediendatenstroms ist, die von Datenframe zu Datenframe ändert.

30. Verfahren nach Anspruch 29, wobei die vorbestimmte Eigenschaft Framegröße, Framehash, Transportstromidentifizierer, Taktsignal und/oder Kontinuitätszählung umfasst.

31. Verfahren nach Anspruch 30, wobei die vorbestimmte Eigenschaft eine Kombination von Framegröße und Framehashwert ist.

32. Anordnung zum Liefern von Inhaltsidentifikation innerhalb eines Mediendatenstroms (11), die die nachfolgenden Elemente umfasst:
- Mittel zum Empfangen eines Datenstroms (11) von Medieninhalt,
- Mittel zum Einfügen von Inhaltsidentifikationsdaten zu regelmäßigen Intervallen innerhalb des Mediendatenstroms,
wobei die Mittel zum Einfügen Folgendes umfassen:
- ein Datenextraktionsmodul (13) zum Extrahieren von Daten in Bezug auf eine vorbestimmte Eigenschaft des Mediendatenstroms,
- Mittel (14) zum Kombinieren der extrahierten Daten mit Inhaltsidentifikationsdaten (12);
- ein Verschlüsselungsmodul (16) zum Hinzufügen einer digitalen Unterschrift zu den kombinierten Daten; und
- ein Datenzusammenfügungsmodul (17) zum Einfügen der kombinierten Daten und der digitalen Unterschrift als gesicherte Inhaltsidentifikationsdaten in den Datenstrom (18).

33. Anordnung nach Anspruch 32, wobei die Mittel zum Kombinieren einen Hashfunktionsgenerator (14) aufweisen zum Bilden eines Hashcodes aus den kombinierten Daten, wobei das Verschlüsselungsmodul die digitale Unterschrift zu dem Hashcode hinzufügt.

34. Anordnung zum Umcodieren eines Mediandatenstroms, wobei die Anordnung Folgendes umfasst:
- Mittel zum Empfangen eines Datenstroms (21) mit Medieninhalt mit eingebetteten gesicherten Inhaltsidentifikationsdaten, wobei die gesicherten Inhaltsidentifikationsdaten Daten in Bezug auf eine vorbestimmte Eigenschaft des Mediendatenstroms enthalten;
- ein Transcodermodul (20a) zum Umcodieren des Medieninhalts des Datenstroms in ein neues Format;
- ein Datenextraktionsmodul (23) zum Extrahieren von Daten in Bezug auf eine vorbestimmte Eigenschaft des Mediendatenstroms in dem neuen Format und zum Extrahieren von Inhaltsidentifikationsdaten aus dem Mediendatenstrom;
- Mittel (24) zum Kombinieren der extrahierten Daten mit den extrahierten Inhaltsidentifikationsdaten,
- ein Verschlüsselungsmodul (26) zum Hinzufügen einer digitalen Unterschrift zu den kombinierten Daten; und
- ein Datenzusammenfügungsmodul (27) zum Einfügen der kombinierten Daten und der digitalen Unterschrift als neu gesicherte Inhaltsidentifikationsdaten in den Datenstrom (28).

35. Anordnung zum Überprüfen der Integrität der gesicherten Inhaltsidentifikationsdaten, die in einen Mediendatenstrom eingebettet sind, wobei diese Anordnung Folgendes umfasst:
- Mittel zum Empfangen eines Datenstroms (40) mit Medieninhalt mit eingebetteten gesicherten Inhaltsidentifikationsdaten, wobei die gesicherten Inhaltsidentifikationsdaten Daten in Bezug auf eine vorbestimmte Eigenschaft des Mediendatenstroms enthalten;
- ein Datenextraktionsmodul (41) zum Extrahieren erster Daten in Bezug auf eine vorbestimmte Eigenschaft des Mediendatenstroms;
- ein Entschlüsselungsmodul (44) zum Extrahieren von Inhaltsidentifikationsdaten aus dem Mediendatenstrom; und zum Extrahieren zweiter Daten in Bezug auf die vorbestimmte Eigenschaft aus den gesicherten Inhaltsidentifikationsdaten;
- ein Vergleichsmodul (45) zum Vergleichen der ersten Daten mit den zweiten Daten zum Überprüfen der Authentizität der extrahierten Inhaltsidentifikationsdaten.

36. Computerprogrammprodukt, mit einem von Computer auslesbaren Medium mit Computerprogrammcodemitteln, die dazu vorgesehen sind, dass, wenn das Programm in einen Computer geladen wird, der Computer die Prozedur eines der Ansprüche 1 bis 31 durchführt.

37. Computerprogrammprodukt, verteilbar durch elektronische Datenübertragung, mit Computerprogrammcodemitteln, die dazu vorgesehen sind, dass, wenn das genannte Programm in einen Computer geladen ist, der Computer die Prozedur eines der Ansprüche 1 bis 31 durchführt.

## Revendications

1. Procédé pour fournir une identification de contenu dans une séquence de données média (11) comprenant les étapes suivantes:
réception d'une séquence de données (11) de contenu média;
insertion de données d'identification de contenu à des intervalles réguliers dans la séquence de données média,
le procédé étant **caractérisé par** l'étape d'insertion de données d'identification de contenu comprenant les étapes supplémentaires suivantes:
extraction (33) de données relatives à une propriété prédéterminée de la séquence de données média;
combinaison des données extraites avec des données d'identification de contenu (12);
application (36) d'une signature numérique aux données combinées; et
insertion (37) des données combinées et de la signature numérique comme données d'identification de contenu sécurisées dans la séquence de données.

2. Procédé selon la revendication 1 dans lequel les données d'identification de contenu sont insérées dans chaque trame.

3. Procédé selon la revendication 1 dans lequel les données d'identification de contenu sont numériquement combinées à une propriété prédéterminée de la séquence de données.

4. Procédé selon la revendication 3 dans lequel l'étape de combinaison des données extraites avec des données d'identification de contenu comprend l'étape de formation d'un code de hachage à partir des données extraites et des données d'identification de contenu.

5. Procédé selon la revendication 1 dans lequel la séquence de données média peut comprendre une quelconque ou plusieurs images et séquences de données audio ou vidéo.

6. Procédé selon la revendication 3 dans lequel la propriété prédéterminée est n'importe quelle propriété de la séquence de données média qui change de trame de données en trame de données.

7. Procédé selon la revendication 6 dans lequel la propriété prédéterminée comprend un ou plusieurs éléments parmi: taille de trame, hachage de trame, identifiant de séquence de transport, signal d'horloge et compte de continuité.

8. Procédé selon la revendication 7 dans lequel la propriété prédéterminée est une combinaison de taille de trame et de hachage de trame.

9. Procédé selon la revendication 4 dans lequel l'étape d'application d'une signature numérique au code de hachage inclut de plus une application de signatures numériques de l'émetteur de la séquence de données média et d'une autorité de certification.

10. Procédé de transcodage d'une séquence de données média comprenant les étapes suivantes:
réception d'une séquence de données de contenu média incluant des données d'identification de contenu intégrées, sécurisées, dans laquelle les données d'identification de contenu sécurisées incorporent des données relatives à une propriété prédéterminée de la séquence de données média;
transcodage du contenu média de la séquence de données en un nouveau format;
extraction de données relatives à une propriété prédéterminée de la séquence de données média dans son nouveau format;
extraction de données d'identification de contenu de la séquence de données média;
combinaison des données extraites avec les données d'identification de contenu extraites;
application d'une signature numérique aux données combinées; et
insertion des données combinées et de la signature numérique comme données d'identification de contenu re-sécurisées dans la séquence de données.

11. Procédé selon la revendication 10 dans lequel le nouveau format de la séquence de données a une résolution ou une largeur de bande de transmission/stockage plus basse que le format original de la séquence de données.

12. Procédé selon la revendication 10 dans lequel le contenu média peut comprendre une quelconque ou plusieurs images et séquences de données audio ou vidéo.

13. Procédé selon la revendication 10 dans lequel la propriété prédéterminée est n'importe quelle propriété de la séquence de données média qui change de trame de données en trame de données.

14. Procédé selon la revendication 13 dans lequel la propriété prédéterminée comprend un ou plusieurs éléments parmi: taille de trame, hachage de trame, identifiant de séquence de transport, signal d'horloge et compte de continuité.

15. Procédé selon la revendication 14 dans lequel la propriété prédéterminée est une combinaison de taille de trame et de hachage de trame.

16. Procédé selon la revendication 10 dans lequel l'étape d'application d'une signature numérique aux données combinées inclut de plus une application d'une signature numérique du dispositif transcodeur.

17. Procédé selon la revendication 16 dans lequel l'étape d'application d'une signature numérique aux données combinées inclut de plus l'étape de mise à disposition d'une clé publique correspondante du dispositif transcodeur, qui est numériquement signée par l'émetteur de données d'identification de contenu.

18. Procédé selon la revendication 10 dans lequel l'étape de combinaison des données extraites avec les données d'identification de contenu extraites inclut de plus l'étape de modification des données d'identification de contenu extraites.

19. Procédé selon la revendication 18 dans lequel l'étape de modification des données d'identification de contenu extraites comprend l'inclusion d'une indication du nouveau format de la séquence de données transcodée.

20. Procédé selon la revendication 18 dans lequel l'étape de modification des données d'identification de contenu extraites comprend l'inclusion d'une identité d'un dispositif réalisant le transcodage.

21. Procédé de vérification de l'intégrité de données d'identification de contenu sécurisées intégrées dans une séquence de données média, comprenant les étapes suivantes:
réception d'une séquence de données de contenu média incluant des données d'identification de contenu intégrées, sécurisées, dans laquelle les données d'identification de contenu sécurisées incorporent des données relatives à une propriété prédéterminée de la séquence de données média;
extraction de premières données relatives à une propriété prédéterminée de la séquence de données média;
extraction de données d'identification de contenu de la séquence de données média;
extraction de deuxièmes données relatives à la propriété prédéterminée à partir des données d'identification de contenu sécurisées;
comparaison des premières données et des deuxièmes données pour vérifier l'authenticité des données d'identification de contenu extraites.

22. Procédé selon la revendication 21 dans lequel les données d'identification de contenu sont extraites de données d'identification sécurisées.

23. Procédé selon la revendication 21 dans lequel l'étape de comparaison des premières données et des deuxièmes données comprend une comparaison d'un hachage des premières données et des données d'identification de contenu extraites avec les deuxièmes données extraites.

24. Procédé selon la revendication 21 dans lequel l'étape d'extraction de deuxièmes données à partir des données d'identification de contenu sécurisées comprend les étapes suivantes:
obtention d'une clé publique d'un fournisseur de contenu qui a sécurisé les données d'identification de contenu; et
vérification d'une signature chiffrée du fournisseur de contenu en utilisant la clé publique.

25. Procédé selon la revendication 24 dans lequel l'étape d'extraction de deuxièmes données à partir des données d'identification de contenu sécurisées comprend les étapes suivantes:
obtention d'une clé publique d'une autorité de certification;
vérification de l'authenticité de la clé publique du fournisseur de contenu en utilisant la clé publique de l'autorité de certification.

26. Procédé selon la revendication 21 dans lequel la séquence de données média est reçue via un dispositif transcodeur, et dans lequel l'étape d'extraction de deuxièmes données à partir des données d'identification de contenu sécurisées comprend l'étape de vérification que le dispositif transcodeur était autorisé à modifier la séquence de données par un émetteur des données d'identification de contenu.

27. Procédé selon la revendication 26 dans lequel l'étape d'extraction de deuxièmes données à partir des données d'identification de contenu sécurisées comprend les étapes suivantes:
obtention d'une clé publique du dispositif transcodeur qui avait sécurisé les données d'identification de contenu, la clé publique étant numériquement signée par l'émetteur des données d'identification de contenu;
obtention d'une clé publique de l'émetteur;
vérification d'une signature chiffrée de l'émetteur en utilisant la clé publique de l'émetteur, et en vérifiant ainsi la clé publique du dispositif transcodeur;
vérification des informations d'identification de contenu en utilisant la clé publique vérifiée du dispositif transcodeur.

28. Procédé selon la revendication 21 dans lequel le contenu média peut comprendre une quelconque ou plusieurs images et séquences de données audio ou vidéo.

29. Procédé selon la revendication 21 dans lequel la propriété prédéterminée est n'importe quelle propriété de la séquence de données média qui change de trame de données en trame de données.

30. Procédé selon la revendication 29 dans lequel la propriété prédéterminée comprend un ou plusieurs éléments parmi: taille de trame, hachage de trame, identifiant de séquence de transport, signal d'horloge et compte de continuité.

31. Procédé selon la revendication 30 dans lequel la propriété prédéterminée est une combinaison de taille de trame et de hachage de trame.

32. Appareil pour fournir une identification de contenu dans une séquence de données média (11) comprenant:
un moyen pour recevoir une séquence de données (11) de contenu média;
un moyen pour insérer des données d'identification de contenu à des intervalles réguliers dans la séquence de données média,
dans lequel le moyen d'insertion comprend:
un module d'extraction de données (13) pour extraire des données relatives à une propriété prédéterminée de la séquence de données média;
un moyen (14) de combinaison des données extraites avec des données d'identification de contenu (12);
un module de chiffrement (16) pour appliquer une signature numérique aux données combinées; et
un module de fusion de données (17) pour insérer les données combinées et la signature numérique comme données d'identification de contenu sécurisées dans la séquence de données (18).

33. Appareil selon la revendication 32 dans lequel le moyen de combinaison inclut un générateur de fonction de hachage (14) pour former un code de hachage à partir des données combinées, le module de chiffrement appliquant la signature numérique au code de hachage.

34. Appareil pour transcoder une séquence de données média, comprenant:
un moyen pour recevoir une séquence de données (21) de contenu média incluant des données d'identification de contenu intégrées, sécurisées, dans lequel les données d'identification de contenu sécurisées incorporent des données relatives à une propriété prédéterminée de la séquence de données média;
un module transcodeur (20a) pour transcoder le contenu média de la séquence de données en un nouveau format;
un module d'extraction de données (23) pour extraire des données relatives à une propriété prédéterminée de la séquence de données média dans son nouveau format et pour extraire des données d'identification de contenu de la séquence de données média;
un moyen (24) pour combiner les données extraites avec les données d'identification de contenu extraites;
un module de chiffrement (26) pour appliquer une signature numérique aux données combinées; et
un module de fusion de données (27) pour insérer les données combinées et la signature numérique comme données d'identification de contenu re-sécurisées dans la séquence de données (28).

35. Appareil pour vérifier l'intégrité de données d'identification de contenu sécurisées intégrées dans une séquence de données média, comprenant:
un moyen pour recevoir une séquence de données (40) de contenu média incluant des données d'identification de contenu intégrées, sécurisées, dans lequel les données d'identification de contenu sécurisées incorporent des données relatives à une propriété prédéterminée de la séquence de données média;
un module d'extraction de données (41) pour extraire des premières données relatives à une propriété prédéterminée de la séquence de données média;
un module de déchiffrement (44) pour extraire des données d'identification de contenu de la séquence de données média; et pour extraire des deuxièmes données relatives à la propriété prédéterminée à partir des données d'identification de contenu sécurisées;
un module de comparaison (45) pour comparer les premières données et les deuxièmes données pour vérifier l'authenticité des données d'identification de contenu extraites.

36. Produit programme informatique comprenant un support lisible par ordinateur supportant un moyen de code de programme informatique adapté, lorsque ledit programme est chargé dans un ordinateur, pour faire exécuter par l'ordinateur la procédure de l'une quelconque des revendications 1 à 31.

37. Produit programme informatique distribuable par transmission de données électroniques, comprenant un moyen de code de programme informatique adapté, quand ledit programme est chargé dans un ordinateur, pour faire exécuter par l'ordinateur la procédure de l'une quelconque des revendications et 1 à 31.
